# FASCICULE DE BREVET EUROPEEN

(11) **EP 1 513 319 B1**
(45) Date de publication et mention de la délivrance du brevet: **13.05.2015**
(21) Numéro de dépôt: 04300454.8
(22) Date de dépôt: 21.07.2004
(51) Int. Cl.: H04L 29/06

(54) **Procédé de protection d'un contenu numérique**
Verfahren zum Schutz von digitalen Daten
Method of protecting a digital content

(30) Priorité: 04.08.2003 FR 0350396
(43) Date de publication de la demande: 09.03.2005
(73) Titulaire: Société Française du Radiotéléphone, 92915 Paris la Défense Cedex (FR)
(72) Inventeur: Wary, M. Jean-Philippe, 92340 Bourg la Reine (FR)
(74) Mandataire: Schmit, Christian Norbert Marie

(56) Documents cités:
- US-A1- 2002 049 679
- JIAN ZHAO: "Applying Digital Watermarking Techniques to Online Multimedia Commerce", PROCEEDINGS OF THE INTERNATIONAL CONFERENCE ON IMAGING SCIENCE,SYSTEMS AND APPLICATIONS, XX, XX, 30 juin 1997 (1997-06-30), XP002221738,

## Description

L'invention a pour objet un procédé de protection d'un contenu numérique. Un contenu numérique est une succession de bits enregistrables sur un support quelconque parmi au moins ceux désignés par mémoire vive, mémoire morte, CD-ROM, DVD, disquette, ... la liste n'étant pas exhaustive. Un contenu numérique appartient donc au moins à l'ensemble formé par les fichiers musicaux, les fichiers d'images, les fichiers vidéos, les fichiers de programmes, et la liste n'est également encore pas exhaustive. Le domaine de l'invention est donc celui de la distribution de contenus numériques, quel que soit le média de distribution, en particulier que la distribution soit effectuée en ligne ou sur un support physique.

Un but de l'invention est de limiter la distribution illégale de contenus numériques.

Un autre but de l'invention est de limiter la distribution illégale de contenus numériques de manière peu contraignante pour le consommateur de ces contenus numériques.

Un autre but de l'invention est de faciliter la détection des distributions illégales de contenus numériques.

Un autre but de l'invention est de permettre de remonter simplement à la source d'une distribution illégale de contenus numériques.

Dans l'état de la technique on connaît diverses techniques pour protéger des contenus numériques. Une de ces techniques consiste à verrouiller l'accès au contenu numérique en utilisant un codage propriétaire lié à un logiciel de décodage lui-même verrouillé par un mot de passe par exemple. Une autre de ces techniques consiste à bloquer le contenu numérique sur un support, par exemple un CD, comme c'est déjà le cas de certaines oeuvres musicales. Un tel CD ne peut alors théoriquement plus être lu par des appareils susceptibles de dupliquer son contenu, comme un ordinateur personnel.

Les techniques de protection actuelles démontrent quotidiennement leurs limitations. Il se trouve toujours en effet une personne pour mettre à disposition, via Internet par exemple, un algorithme permettant d'accéder au contenu numérique chiffré ou protégé sur son support. Cela ruine rapidement les efforts consentis par les propriétaires des droits des contenus numériques pour protéger ces droits.

L'application des techniques actuelles de protection peut présenter des effets extrêmement négatifs tels que certains supports deviennent illisibles du fait même de la protection. Dans ce cas le consommateur ayant légalement acquis le contenu numérique peut se retrouver dans l'incapacité d'accéder à ce contenu numérique de par l'inadaptation de son matériel de lecture. Ce cas est de plus en plus fréquent pour les CD audio. En effet certains CD audio protégés ne sont plus compatibles avec certaines platines de salon. L'effet obtenu va totalement à l'encontre de l'effet désiré puisque qu'à cours terme la confiance du consommateur va être érodée. Le consommateur ne souhaite en effet pas avoir à acheter une platine spécifique pour chaque technique de protection d'un contenu numérique. L'effet obtenu est d'autant plus néfaste que ces protections ne résistent pas longtemps et que le contenu numérique finit toujours par être pillé.

Le document «Applying Digital Waremarking Techniques to Online Multimedia Commerce», XP002221738, 30 Juin 1997 (1997-06-30) décrit une technique de tatouage d'un fichier numérique pouvant être délivré par un site Internet. Ce document préconise l'identification d'un utilisateur par la combinaison d'un identifiant et d'un mot de passe.

Dans l'invention on résout ces problèmes en personnalisant les contenus numériques sans altérer leur format, et donc leur compatibilité avec tous les matériels agréés pour lire le format en question. Cette personnalisation consiste en un marquage imperceptible sans les outils adéquats, ledit marquage ne perturbant pas les appareils et programmes de lecture, car ledit marquage respecte le format du contenu numérique. Un tel marquage s'appelle aussi un tatouage, technique également connue par l'homme du métier sous le nom de 'watermarking'. Dans l'invention on personnalise ce tatouage en tatouant un contenu numérique au moins avec un identifiant de la personne obtenant légalement le contenu numérique. Le tatouage est réalisé à partir d'un algorithme à clé secrète ce qui le rend particulièrement robuste, c'est-à-dire dur à effacer. La clé secrète n'est connue que des seuls titulaires autorisés à distribuer le contenu numérique. Ces titulaires, lorsqu'ils interceptent un contenu numérique, peuvent donc déterminer à qui il a été distribué et donc si ce contenu numérique a été illégalement employé, par exemple sur un réseau tiers à tiers. (Ces réseaux sont aussi connus sous l'appellation de réseau Peer to Peer ou P2P.) Ce tatouage est apposé au moment de la commande du contenu numérique. La personne commandant le contenu numérique est alors placée face à ses responsabilités et sait qu'il sera facile de la retrouver si elle fait un usage illégal du contenu numérique qu'elle vient d'acquérir, ou si elle ne l'entoure pas des protections minimales empêchant son détournement Des techniques cryptographiques fournissant des services d'authentification mutuelle, confidentialité, intégrité et non-répudiation d'acte peuvent être utilisées lors des échanges nécessaires à la fourniture d'un contenu tatoué pour garantir la qualité de l'acte de tatouage et permettre une lutte contre la fraude efficace au niveau juridique.

L'invention a donc pour objet un procédé de protection d'un contenu numérique fourni par un serveur de contenus d'un fournisseur de contenus numériques telle que définie par la revendication indépendante 1.

Avantageusement l'invention est aussi caractérisée en ce que:
- le serveur de tatouage obtient le contenu numérique sélectionné du serveur de contenus et produit un contenu numérique tatoué incorporant les informations de tatouage transmises par le serveur de présentation et le contenu numérique sélectionné et obtenu, le contenu numérique tatoué étant un fichier au format du contenu numérique sélectionné et obtenu,
- le serveur de tatouage délivre le contenu numérique tatoué à l'utilisateur.

Avantageusement l'invention est aussi caractérisée en ce que les informations de tatouage comportent des informations de gestion numérique des droits associés au contenu numérique.

Avantageusement l'invention est aussi caractérisée en ce que les informations de tatouage comportent des informations de limitation d'utilisation du contenu numérique.

Avantageusement l'invention est aussi caractérisée en ce que le réseau privé est un réseau de téléphonie.

Avantageusement l'invention est aussi caractérisée en ce que tout ou partie de l'identifiant civil durable de l'utilisateur est un numéro de téléphone.

Avantageusement l'invention est aussi caractérisée en ce que le serveur de tatouage est géré par l'opérateur contrôlant le réseau privé.

Avantageusement l'invention est aussi caractérisée en ce que le serveur de tatouage est géré par le fournisseur de contenus numériques.

Avantageusement l'invention est aussi caractérisée en ce que le serveur de présentation est géré par le fournisseur de contenus numériques.

Avantageusement l'invention est aussi caractérisée en ce que l'obtention d'un identifiant civil durable d'utilisateur par le serveur de présentation est soumise à une approbation par le serveur d'identification, cette approbation se faisant en fonction d'un identifiant de l'émetteur d'une requête d'identification ou d'une authentification de l'émetteur de la requête.

Avantageusement, les échanges entre les serveurs de présentation, d'identification, de tatouage, de contenus et la connexion sont protégés par une authentification mutuelle des parties, par des mécanismes de contrôle d'intégrité, par des mécanismes assurant la confidentialité des échanges, par des mécanismes garantissant la non-répudiation des échanges, mécanismes pouvant mettre en oeuvre des moyens et conventions cryptographiques.

L'invention a aussi pour objet un dispositif de protection d'un contenu numérique fourni par un serveur de contenus d'un fournisseur de contenus numériques telle que définie par la revendication indépendante 11.

L'invention sera mieux comprise à la lecture de la description qui suit et à l'examen des figures qui l'accompagnent. Celles-ci sont présentées à titre indicatif et nullement limitatif de l'invention. Les figures montrent:
- Figure 1 : une illustration d'étapes du procédé selon l'invention.
- Figure 2: une illustration d'une architecture réseau dans laquelle le procédé selon l'invention est mis en oeuvre.
- Figure 3: une illustration de champs d'une demande d'identification.
- Figure 4: une illustration de champs d'une réponse à une demande d'identification.
- Figure 5: une illustration de champs d'un message de tatouage.

Dans la description suivante un serveur est équivalent à un ordinateur. Lorsque l'on prête une action à un serveur, ou à un appareil de manière générale, cette action est effectuée par un microprocesseur du serveur commandé par des codes instructions d'une mémoire du serveur. Un serveur comporte aussi tous les moyens nécessaires à son raccordement sur un ou plusieurs réseaux de type Internet, Ethernet, ou autre.

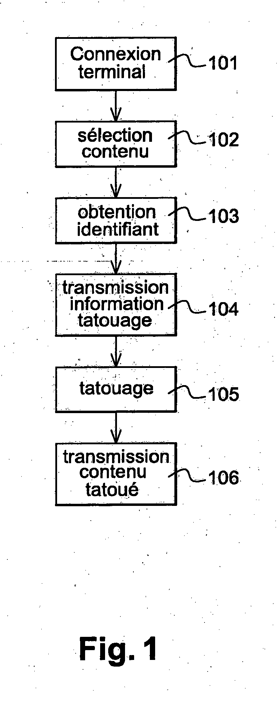

La figure 1 montre une étape 101 dans laquelle un utilisateur d'un terminal client établit une connexion avec un serveur de présentation.

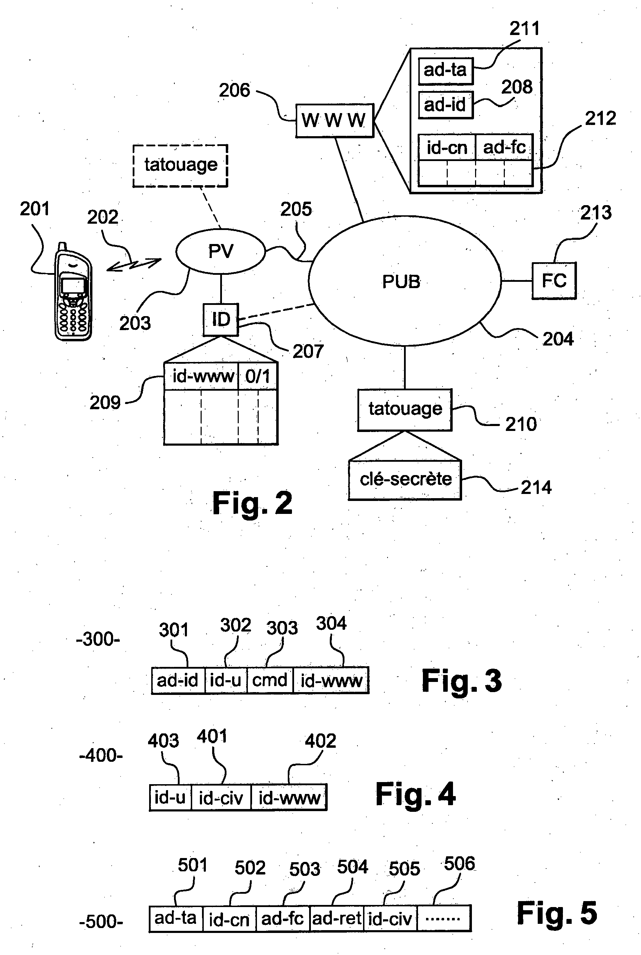

La figure 2 montre un terminal 201 client connecté par une liaison hertzienne 202 à un réseau 203 privé. Dans un exemple, le terminal 201 est un téléphone mobile connecté au réseau 203 d'un opérateur de téléphonie mobile selon un mode de type GPRS. On parle d'un réseau privé ou fermé car seul l'opérateur gérant le réseau 203 peut intervenir sur ce réseau que ce soit pour des raisons techniques ou commerciales. En particulier la mise en oeuvre du réseau 203 en termes d'infrastructures, de protocoles et de droit d'accès, est à la totale discrétion de l'opérateur gérant le réseau 203 privé. Par opposition sur un réseau 204 public ou ouvert, comme Internet par exemple, les protocoles et les modes d'accès sont connus et exploitables par tous. La figure 2 montre que les réseaux 203 privé et 204 public sont interconnectés via une connexion 205. La connexion 205 est réalisée grâce à des passerelles gérées par l'opérateur du réseau 203 privé. Ces passerelles mettent en oeuvre la politique de l'opérateur du réseau 203 privé vis-à-vis du réseau 204 public. Cette politique porte à la fois sur les connexions entrantes et sortantes du réseau 203 privé. De manière simplifiée cette politique se résume à autoriser ou à refuser ces connexions selon des critères variés, comme l'identité des participants à la connexion, la nature de la connexion, le volume de données lié à la connexion..., la liste n'étant bien entendu pas exhaustive

La figure 2 montre aussi un serveur 206 de présentation connecté au réseau 204 public. Un tel serveur de présentation est aussi connu sous le nom de serveur web, ou encore serveur http (hyper text transfer protocol, pour protocole de transfert hypertexte). Un tel serveur permet l'hébergement de sites Internet, aussi connus sous le nom de sites web. Un site Internet comporte au moins une page, aussi appelée page web. Chaque page web comporte des liens vers d'autres pages web, ou d'autres contenus numériques. Une page web est un contenu numérique.
Dans l'étape 101, l'utilisateur du terminal 201 établit une connexion avec le serveur 206 de présentation. Cette connexion est établie via les réseaux 203 privé et 204 public. Cette connexion est établie en exécutant sur le terminal 201 un programme de type navigateur Internet, aussi appelé explorateur Internet. Dans les faits, l'utilisateur du terminal 201 se connecte à un site web hébergé par le serveur 206. Ce site web permet la présentation à l'utilisateur du terminal 201 d'un certain nombre de contenus numériques, par exemple des morceaux de musique, des films, des programmes, disponibles pour la distribution. Ici on décrit une mise en oeuvre de l'invention basée sur une connexion http. Dans la pratique l'invention supporte tout type de protocoles, parmi lesquels on peut citer ftp (file transfer protocol, pour protocole de transfert de fichier), wtp (wireless transfer protocol, pour protocole de transmission sans fil)..., la liste n'étant bien sûr pas exhaustive. Dans la pratique, l'invention peut aussi être basée sur des protocoles non connectés, ainsi que des protocoles asynchrones, en utilisant par exemple des flux de messagerie parmi lesquels on peut citer smtp (Simple Mail Transfer Protocol pour le protocole de messagerie sur Internet), ou en utilisant les services offerts par les réseaux 203 privés (service SMS et MMS dans le cadre d'un réseau mobile), dans cette variante le serveur de présentation peut être directement consommateur des SMS et MMS.

On note ici que le terminal 201 ne saurait être limité à un terminal de téléphonie mobile. en effet, le terminal 201 peut aussi être un ordinateur personnel ou tout dispositif permettant de se connecter à un serveur de type serveur web. Le réseau 203 privé est d'une manière générale le réseau privé d'un fournisseur d'accès à Internet (FAI).

De l'étape 101 on passe à une étape 102 de sélection d'un contenu numérique. Cette sélection se fait lors du parcours du site web hébergé par le serveur 206 par l'utilisateur du terminal 201. Cette sélection correspond à une action équivalente à la validation classique d'un achat sur un site Internet marchand. L'étape 102 se termine lorsque le serveur 206 a obtenu la confirmation de la sélection effectuée par l'utilisateur du terminal 201, cette confirmation correspondant à une action de validation, via une page du site web de présentation, de la part de l'utilisateur du terminal 201. Cette confirmation permet à l'utilisateur du terminal 101 d'indiquer au serveur 206 de présentation quel contenu numérique l'utilisateur souhaite obtenir. Dans une variante de mise en oeuvre, l'utilisateur peut renseigner le mode de délivrance du contenu sélectionné, par exemple au travers d'une adresse e-mail, d'un numéro de téléphone ou d'une adresse de livraison si un support physique est requis. Dans la pratique une mémoire du serveur 206 de présentation permet d'associer à chaque contenu numérique présenté un identifiant de contenu numérique. La sélection d'un contenu numérique permet donc en même temps la sélection d'un identifiant de contenu numérique associé au contenu numérique sélectionné.

De l'étape 102 on passe alors à une étape 103 d'obtention d'un identifiant de l'utilisateur du terminal 201 par le serveur 206. Cet identifiant est appelé ici un identifiant civil durable. C'est un identifiant qui permet d'identifier civilement une personne pendant plusieurs années, voire plusieurs dizaines d'années. D'une manière générale cet identifiant est pertinent sur la durée de vie des droits de propriété intellectuelle attachés au contenu numérique.

Dans une première variante d'obtention d'un identifiant civil durable, le serveur 206 de présentation produit une requête de demande d'identification. Le serveur 206 de présentation émet cette requête de demande d'identification vers un serveur 207 d'identification. Le serveur d'identification est soit connecté au réseau 203 privé, soit directement connecté au réseau 204 public. Le serveur 206 comporte une mémoire 208 lui permettant de stocker une adresse du serveur 207 d'identification. Cette mémoire 208 est soit renseignée à la configuration du serveur 206 de présentation, soit renseignée via le contenu d'un champ des messages échangés entre le serveur 206 de présentation et le terminal 201 lors des étapes 101 et 102.

Dans la pratique il n'y a pas qu'un seul opérateur gérant un réseau privé 203, mais chaque opérateur se voit attribuer une plage d'adresses IP (Internet Protocol, pour protocole Internet on entend par protocole IP les protocoles IPv4 et IPv6) lorsqu'il se connecte au réseau public 204 au travers de la connection 205. On peut donc savoir à quel opérateur est abonné un utilisateur en fonction de l'adresse IP qu'il utilise pour communiquer sur le réseau 204 public. Suivant le protocole utilisé au sein du réseau public 204, il peut être tout aussi simple d'identifier à quel opérateur est abonné l'utilisateur en fonction des urls ou du nommage utilisés lors de l'accès au serveur de présentation (DNS : Domain Name System) . Le serveur 206 est donc dans la pratique capable d'associer à chaque connexion entrante (étape 101) une adresse d'un serveur d'identification. Le serveur 206 de présentation est donc capable de déterminer à quel serveur d'identification envoyer une requête d'identification en fonction de l'adresse IP que lui a présentée l'utilisateur ayant effectué la sélection d'un contenu numérique. A cette fin, dans une variante, la mémoire 208 est divisée en plusieurs lignes, chaque ligne correspondant à une plage d'adresses IP. Chaque ligne comporte deux colonnes, une première colonne pour décrire une plage d'adresses IP, une deuxième colonne pour associer à la description de la plage une adresse IP d'un serveur d'identification.

La requête de demande d'identification comporte aussi l'adresse Internet, ou un identifiant quelconque de l'utilisateur généré par le système 205 aux étapes 101 et 102. La figure 3 montre une requête 300 de demande d'identification. La requête 300 comporte au moins:
- un champ 301 destinataire qui comporte l'adresse du serveur 207 d'identification, adresse lue dans la mémoire 208,
- un champ 302 identifiant d'utilisateur qui comporte un identifiant avec lequel un utilisateur s'est présenté au serveur 206 de présentation,
- un champ 303 facultatif de commande indiquant au serveur recevant la requête qu'il s'agit d'une requête de demande d'identification,
- un champ 304 émetteur qui comporte un identifiant, une adresse IP en général, du serveur 206 de présentation émettant la demande d'identification, ce champ pouvant, suivant une variante, être complété par une information chiffrée ou une signature électronique si une authentification est requise par le serveur 207.

La requête 300, une fois produite est émise à destination du serveur. 207.

Le serveur 207 vérifie que:
1 - le champ 304 de la requête 300 correspond bien à un serveur étant autorisé à effectuer des demandes d'identification,
2 - le champ 302 correspond bien à un de ses abonnés. Par ses abonnés, il faut comprendre les abonnés à l'opérateur gérant le réseau 203 et ayant délégué la fonction d'identification au serveur 207.

Si une requête de demande d'identification passe les deux vérifications, elle est approuvée.

La première vérification se fait via une table 209 du serveur 207 d'identification. Cette table associe à un identifiant, par exemple une adresse IP, une valeur indiquant si l'on doit répondre ou non à une demande d'identification émanant d'un appareil présentant cet identifiant. Cette autorisation de requérir un identifiant peut aussi être basée sur le partarge d'une information entre le serveur 207 et le serveur requérant (par exemple un mot de passe ou une clef secrète), de la même façon cette autorisation peut être subordonnée au résultat de calculs cryptographiques utilisés pour valider une authentification, mutuelle ou à sens unique, voire une signature électronique (technologie de type PKI : Public Key Infrastructure et certificats X509). Par défaut si l'identifiant n'est pas présent dans la table 209, il n'y a pas de réponse à une demande d'identification. Si l'identifiant est présent dans la table 209 alors on consulte les autorisations associées à cet identifiant.

Pour la deuxième vérification, un opérateur connaît évidemment le moyen d'adresser son abonné lors de ses connections. Dans le cadre de l'utilisation du protocole IP dans les réseaux 203, les plages d'adresses qui ont été attribuées à l'opérateur du réseau 203 au niveau de la connexion 205 permettent de faire facilement cette vérification. De plus au moment où l'utilisateur du terminal 201 s'est connecté au serveur 206, l'opérateur du réseau 203 a attribué au terminal 201 une adresse IP. L'opérateur est donc en mesure, au moment de la réception de la demande d'identification par le serveur 207, d'identifier civilement l'utilisateur du terminal 201. En effet, au moment de la réception de la demande d'identification, l'utilisateur du terminal 201 n'a toujours pas reçu la confirmation de sa sélection par le serveur 206, donc le terminal 201 est toujours connecté au réseau 204 public dans l'attente de cette confirmation et donc l'adresse IP du champ 302 de la requête 300 est toujours attribuée à cet utilisateur. Cependant cette adresse IP sera attribuée à un autre utilisateur quasiment dès que l'utilisateur du terminal 201 se sera déconnecté du réseau 204 public. Il ne s'agit donc pas d'un identifiant durable et pratique. Ainsi, à cet instant, l'opérateur du réseau 203, et donc le serveur 207, peuvent identifier civilement la personne à qui cette adresse IP a été attribuée. En effet le serveur 207 a accès, au moins par délégation d'autorisation de l'opérateur gérant le réseau 203, au réseau 203 et à ses équipements. Le serveur 207 d'identification a en particulier accès aux équipements chargés de l'attribution des adresses IP aux abonnés au réseau 203 privé souhaitant établir une connexion via le réseau 204 public. Ces équipements n'allouent pas d'adresse IP à un terminal qu'ils ne peuvent pas identifier. Parmi ces équipements on cite les HLR (Home Location rRgister, pour enregistreur de localisation nominale), VLR (Visitor Location Register, pour enregistreur de localisation des visiteurs d'une zone géographique) et GGSN (Gateway GPRS Support Node, pour noeud passerelle GPRS).

Le serveur 207, ayant accès aux équipements du réseau 203 privé, peut donc fournir en réponse à la demande d'identification, un identifiant civil durable. Un tel identifiant civil durable est, par exemple, un numéro de téléphone de type MSISDN, un numéro de sécurité sociale, un numéro de carte d'identité, l'url du lieu de stockage d'un certificat d'identité électronique (par exemple de type X509), ou tout autre identifiant que l'opérateur du réseau 203 s'engage à pouvoir attribuer à une personne civile durant une période durable. On rappelle ici que par durable on entend une période comparable à la durée des droits attachés aux contenus numériques, et/ou comparable à la durée de vie du support du contenu numérique. Une période durable se mesure donc en année, et de préférence en dizaines d'années. Dans une variante, l'identifiant civil durable est daté. Dans cette variante l'identifiant civile durable est donc la concaténation d'un identifiant et d'une date ou d'un numéro de série unique ou de toute autre information permettant l'identification dans le temps de l'utilisateur associé à cet identifiant. Cela permet en particulier de gérer la réattribution des numéros MSISDN. Toujours selon cette variante, l'utilisation d'un identifiant basé sur une adresse IP de type IPV4 est rendue possible , mais dans ce cas il faut stocker un gros volume de données sur une durée très longue. En effet, il faudrait stocker toutes les sessions IP de tous les abonnés, en plus de leur numéro MSISDN, ce qui rendrait l'identification d'une personne à travers un identifiant civil durable coûteuse en ressource. Selon une autre variante de cet identifiant civil durable, une adresse IP v6 peut être attribuée de façon permanente à un abonné (à l'instar d'un numéro de sécurité sociale). Dans une autre variante cet identifiant civil durable est le résultat du chiffrement d'un numéro de type MSISDN et des paramètres associés par l'opérateur du réseau 203 utilisant un procédé de chiffrement secret. Cela permet d'utiliser des procédés produisant des identifiants civils durables variables dans le temps, ce qui empêche le serveur 206 de faire des statistiques sur un identifiant de type MSISDN par exemple.

La réponse à une demande d'identification autorisée est un message 400 à destination du serveur 206. Le message 400 comporte alors au moins un champ 401 identifiant civil durable et un champ 402 destinataire comportant une adresse du serveur 206 de présentation. De manière optionnelle le message 400 comporte un champ 403 identique au champ 302. Cette réponse peut être authentifiée, protégée en intégrité et confidentialité par des techniques et conventions cryptographiques établies entre les serveurs 206 et 207 de façon à avoir un haut niveau de confiance dans les données échangées.

Dans une deuxième variante d'obtention d'un identifiant civil durable, cet identifiant est en fait transmis dès la connexion du terminal 201 au serveur 206 de présentation. En effet la connexion du terminal 201 se fait via le réseau 203 privé. L'opérateur du réseau 203 est donc capable d'intercepter, pour prétraitement, les requêtes émises par le terminal 201 lors de cette connexion. En particulier, un équipement du réseau 203 peut traiter les trames émises par le terminal 201 en fonction de l'adresse du destinataire de ces trames. Si cette adresse est présente dans la table 209, alors le réseau 203 modifie la trame de manière à y inclure un identifiant civil durable de l'utilisateur du terminal 201. Le serveur 206 est donc ainsi directement en connaissance d'un identifiant civil durable de l'utilisateur. Dans une autre variante, cet identifiant civil durable est associé à une technique de signature électronique permettant d'authentifier l'origine de la requête et donc de certifier la validité de l'identifiant utilisé dès réception par le serveur 206. Encore, dans une autre variante, cet identifiant civil durable peut être protégé en confidentialité lors de son acheminement vers le serveur 206.

De l'étape 103 on passe à une étape 104 de transmission des informations de tatouages à un serveur 210 de tatouage connecté au réseau 210. Cette transmission se fait via une requête de tatouage. La figure 5 illustre une telle requête produite par le serveur 206 de présentation. Une requête 500 de tatouage comporte au moins:
- un champ 501 destinataire comportant une adresse du serveur de tatouage, cette adresse est connue du serveur 206 de présentation via une mémoire 211 d'adresse de serveur de tatouage. La mémoire 211 est le pendant de la mémoire 208 mais pour les serveurs de tatouage. De la même manière que pour une adresse de serveur d'identification, une adresse de serveur de tatouage peut être associée à une plage d'adresse utilisateur,
- un champ 502 identifiant un contenu numérique, le champ 502 comporte un identifiant du contenu numérique sélectionné lors de l'étape 102, cet identifiant est donc connu du serveur 206,
- un champ 503 adresse d'un serveur 213 d'un fournisseur de contenus susceptible de fournir le contenu numérique sélectionné à l'étape 102. Le serveur 206 de présentation comporte une table 212 associant à chaque identifiant de contenu numérique une adresse d'un serveur de contenus d'un fournisseur de contenus, cette table est remplie grâce à un accord entre le prestataire gérant le serveur 206 de présentation et au moins le fournisseur de contenus gérant le serveur 213. Le but est de pouvoir associer à chaque contenu numérique une adresse d'un serveur de contenus. Les échanges entre les serveurs 206 et 213 peuvent mettre en oeuvre des moyens cryptographiques pour assurer l'authentification mutuelle des parties, la confidentialité et l'intégrité des échanges,
- un champ 504 d'adresse de distribution, cette adresse de distribution ayant été fournie par l'utilisateur du terminal 201 lors de l'une des étapes 101 ou 102, une telle adresse de distribution est, par exemple, une adresse IP (dans ce dernier cas, cette adresse IP peut être l'adresse du champ 302), un numéro de téléphone (MSISDN) si la distribution se fait en ligne, ou encore, par exemple, une adresse mail, une adresse postale de livraison si la distribution se fait hors ligne,
- un champ 505 comportant l'identifiant civil durable obtenu à l'étape 103,
- un champ 506 comportant éventuellement d'autres informations devant être tatouées, comme la date courante , une durée de validité des droits acquis sur le contenu numérique, l'identité de l'auteur du contenu numérique, un identifiant du prestataire de service gérant le serveur 206 de présentation, la description des droits acquis (par exemple nombre d'utilisations, autorisation de distribution...).

Une fois produit, le message 500 est émis vers le serveur 210 de tatouage et on passe à une étape 105 de tatouage du contenu numérique sélectionné à l'étape 102.

Dans l'étape 105 le serveur 210 utilise les informations des champs 502 et 503 pour obtenir le contenu numérique proprement dit. Le serveur 210 de tatouage émet donc une requête au serveur 213 de contenus pour obtenir un contenu numérique. Ce contenu numérique est celui identifié par le champ 502. Dans une variante le message 500 comporte aussi un identifiant du serveur 206 de présentation afin que le serveur de contenus puisse vérifier que la demande d'obtention de contenu numérique est bien originaire d'une entité autorisée à l'émettre. Dans cette variante cet identifiant du serveur 206 est aussi transmis par le serveur 210 de tatouage au serveur 213 de contenus. Pour cette vérification, le serveur de contenus peut aussi chercher à identifier le serveur de tatouage. Cette identification se faisant soit, simplement par l'adresse de réponse de la requête par laquelle le serveur 210 de tatouage cherche à obtenir un contenu numérique, soit, par des moyens cryptographiques plus évolués non limitatif de l'invention. Soit le serveur 213 de contenus connaît cette adresse de réponse et il accède à la requête, soit il ne la connaît pas et il ne transmet pas de contenu numérique en réponse à la requête. Cette connaissance est matérialisée, par exemple, par une mémoire d'identification dans le serveur 213. Cette mémoire d'identification permet alors d'enregistrer une liste d'identifiants qui sont alors connus du serveur 213. Si la requête pour obtenir un contenu numérique est validée, le serveur 213 émet le contenu numérique identifié par le champ 502 vers le serveur 210 de tatouage. On parle alors d'un contenu numérique obtenu par le serveur 210 de tatouage.

Dans la suite de l'étape 105 le serveur de tatouage met en oeuvre un algorithme de tatouage à clé secrète, la clé secrète étant enregistrée dans une mémoire 214 du serveur 210 de tatouage. On préfère un algorithme à clé secrète car ce type d'algorithmes est à l'heure actuelle beaucoup plus robuste que ne le sont les algorithmes à clé publique. Dans l'avenir la tendance pourrait s'équilibrer ou s'inverser, et les algorithmes à clé publique pourraient devenir alors plus pertinents.

Les informations tatouées sur le contenu numérique obtenu sont celles contenues dans les champs 505 et 506. Le résultat du tatouage est un contenu numérique obtenu et tatoué qui est émis vers l'adresse contenue dans le champ 504 lors d'une étape 106 de transmission du contenu numérique obtenu et tatoué.

L'adresse contenue dans le champ 504 peut être l'adresse IP du terminal 201, c'est-à-dire la même que celle qu'il avait lors des étapes précédentes, en particulier des étapes 101 et 102. L'adresse contenue dans le champ 504 peut être l'adresse IP du serveur 206, auquel cas c'est le serveur 206 qui se charge de la distribution du contenu numérique obtenu et tatoué. L'adresse contenue dans le champ 504 peut être une adresse e-mail (pour adresse de courrier électronique). L'adresse contenue dans le champ 504 peut être le MSISDN de l'abonné ou tout autre numéro de téléphone au choix de l'abonné acquéreur du contenu numérique. Dans ce cas la distribution du contenu numérique se fait par rappel téléphonique de l'acquéreur et diffusion sonore ou téléchargement. L'adresse contenue dans le champ 504 peut être une adresse postale auquel cas le contenu numérique obtenu et tatoué est enregistré sur un support, disquette, CD, disque amovible, ledit support étant envoyé par pli postal à l'adresse postale.

Le procédé selon l'invention permet donc de nombreux modes de mise en oeuvre. Parmi ces modes on distingue des modes dits à la volée de ceux dits modes déconnectés. Un mode déconnecté est un mode de réalisation dans lequel l'utilisateur du terminal 201 reçoit le contenu numérique sélectionné par un autre canal que celui qu'il a utilisé pour le sélectionner. Dans ces modes déconnectés le contenu numérique tatoué est typiquement reçu par l'utilisateur du terminal 201 soit, par des techniques de téléchargement pouvant ou non utiliser un des ports d'extension du terminal 201 (port infrarouge, bluetooth, port de liaison série), soit, par e-mail, soit, par voie postale. Pour un mode à la volée, le contenu numérique tatoué est transmis comme si le site de présentation était aussi un site de téléchargement. Dans ce cas le contenu numérique est soit, tatoué puis transmis à l'utilisateur du terminal 201, soit, tatoué au fur et à mesure qu'il est transmis à l'utilisateur du terminal 201.

Dans la description tous les serveurs sont gérés par des entités différentes. Cependant diverses variantes sont envisageables. Ainsi, dans une variante le serveur de tatouage est géré par l'opérateur contrôlant le réseau privé. Dans une autre variante le serveur de tatouage est géré par le fournisseur de contenus numériques. Dans une autre variante le serveur de présentation est géré par le fournisseur de contenus numériques. Dans une autre variante le serveur de présentation et le serveur de tatouage sont gérés par le fournisseur de contenus numériques, enfin encore dans une autre variante le serveur de tatouage assure la délivrance du contenu vers l'utilisateur du terminal.

Ces variantes simplifient la mise en place de l'invention, car si une entité cumule les fonctions, à l'extrême, présentation, tatouage et fourniture de contenus numériques, toutes ces fonctions cumulées peuvent être implantées sur un seul et même serveur, ce qui permet de simplifier grandement les communications entre serveurs, puisque ces communications deviennent internes au serveur unique. Ainsi, les performances peuvent être significativement améliorées et les schémas de vérification considérablement simplifiés .

Une variante intéressante est celle où l'opérateur gérant le réseau privé gère aussi le serveur de tatouage. Cet opérateur peut en effet alors proposer une solution complète, sans recours à des tiers, de protection de contenus numériques.

Une variante intéressante est celle où l'utilisateur accède au serveur de présentation via une communication de type vocal (appel téléphonique) et où la navigation dans les offres de contenus peut être pilotée par l'usage des fréquences DTMF étendues.

La solution de l'invention s'applique à tous types de contenus numériques et avec tout type d'algorithmes de tatouage et ceci sans préjudice du mode de distribution choisi.

## Revendications

1. Procédé de protection d'un contenu numérique fourni par un serveur (213) de contenus d'un fournisseur de contenus numériques comportant les étapes suivantes:
- un serveur (206) de présentation accepte (101) une connexion d'un utilisateur abonné à un opérateur contrôlant un réseau (203) privé et se connectant en utilisant un terminal (201) client et via au moins ce réseau privé audit serveur de présentation d'un prestataire proposant l'accès à des contenus numériques,
- l'utilisateur sélectionne (102) un contenu numérique parmi ceux présentés par le serveur de présentation, **caractérisé en ce que** le procédé comporte les étapes suivantes:
- le serveur de présentation obtient (103) en fonction de l'adresse du terminal (201), d'un serveur (207) d'identification, un identifiant appelé identifiant civil durable de l'utilisateur, cet identifiant civil durable permettant à l'opérateur contrôlant le réseau privé, et ayant fourni ledit identifiant civil durable, d'identifier durablement et civilement l'utilisateur,
- le serveur de présentation transmet (104) des informations de tatouage comportant au moins l'identifiant civil durable de l'utilisateur et un identifiant du contenu numérique sélectionné par l'utilisateur à un serveur (210) de tatouage, pour le tatouage du contenu numérique sélectionné,
- tout ou partie de l'identifiant civil durable de l'utilisateur étant un numéro de téléphone.

2. Procédé selon la revendication 1, **caractérisé en ce que**:
- le serveur de tatouage obtient (105) le contenu numérique sélectionné du serveur de contenus et produit un contenu numérique tatoué incorporant les informations de tatouage transmises par le serveur de présentation et le contenu numérique sélectionné et obtenu, le contenu numérique tatoué étant un fichier au format du contenu numérique sélectionné et obtenu,
- le serveur de tatouage délivre (106) le contenu numérique tatoué à l'utilisateur.

3. Procédé selon l'une des revendications 1 ou 2, **caractérisé en ce que** les informations de tatouage comportent des informations (506) de gestion numérique des droits associés au contenu numérique.

4. Procédé selon l'une des revendications 1 à 3, **caractérisé en ce que** les informations de tatouage comportent des informations (506) de limitation d'utilisation du contenu numérique.

5. Procédé selon l'une des revendications 1 à 4, **caractérisé en ce que** le réseau (203) privé est un réseau de téléphonie.

6. Procédé selon l'une des revendications 1 à 5, **caractérisé en ce que** le serveur de tatouage est géré par l'opérateur contrôlant le réseau privé.

7. Procédé selon l'une des revendications 1 à 6, **caractérisé en ce que** le serveur de tatouage est géré par le fournisseur de contenus numériques.

8. Procédé selon l'une des revendications 1 à 7, **caractérisé en ce que** le serveur de présentation est géré par le fournisseur de contenus numériques.

9. Procédé selon l'une des revendications 1 à 8, **caractérisé en ce que** l'obtention d'un identifiant civil durable d'utilisateur par le serveur de présentation est soumise à une approbation par le serveur d'identification, cette approbation se faisant en fonction d'un identifiant de l'émetteur d'une requête d'identification ou d'une authentification de l'émetteur de la requête.

10. Procédé selon l'une des revendications 1 à 9, **caractérisé en ce que** les échanges entre les serveurs de présentation (206), d'identification (207), de tatouage (210), de contenus (213) et la connexion (205) peuvent être protégés par une authentification mutuelle des parties, par des mécanismes de contrôle d'intégrité, par des mécanismes assurant la confidentialité des échanges, par des mécanismes garantissant la non-répudiation des échanges, ces mécanismes mettant en oeuvre des moyens et conventions cryptographiques.

11. Dispositif de protection d'un contenu numérique fourni par un serveur (213) de contenus d'un fournisseur de contenus numériques comportant: un terminal client (201) apte à se connecter à un serveur (206) de présentation via au moins un réseau (203) privé, le serveur (206) de présentation étant apte à présenter à un utilisateur d'un terminal (201) client des contenus numériques, **caracterisé en ce que** le serveur de présentation étant de plus apte à obtenir en fonction de l'adesse du terminal (201), d'un serveur (207) d'identification, un identifiant civil durable d'utilisateur permettant à l'opérateur contrôlant un réseau privé auquel est connecté le terminal et ayant fourni ledit identifiant civil durable d'utilisateur, d'identifier civilement l'utilisateur, tout ou partie de l'identifiant civil durable de l'utilisateur étant un numéro de téléphone, le serveur d'identification étant apte à autoriser ou non la délivrance de l'identifiant civil durable en fonction de l'émetteur de la requête d'identification, le serveur de présentation étant aussi apte à transmettre à un serveur (210) de tatouage l'identifiant civil durable d'utilisateur et un identifiant d'un contenu numérique pour que le serveur de tatouage produise un contenu numérique tatoué, le serveur de tatouage étant apte à obtenir le contenu numérique à tatouer auprès d'un serveur (213) de contenus numériques, le serveur de tatouage étant aussi apte à délivrer le contenu numérique tatoué.

## Patentansprüche

1. Verfahren zum Schutz eines von einem Inhaltsserver (213) eines Anbieters digitaler Inhalte gelieferten digitalen Inhalts, das die folgenden Schritte aufweist:
- ein Präsentationsserver (206) akzeptiert (101) eine Verbindung eines Benutzers, der bei einem ein privates Netz (203) kontrollierenden Betreiber abonniert ist und sich unter Verwendung eines Client-Endgeräts (201) und über mindestens dieses private Netz mit dem Präsentationsserver eines Diensteanbieters verbindet, der den Zugang zu digitalen Inhalten anbietet,
- der Benutzer wählt (102) einen digitalen Inhalt unter den vom Präsentationsserver präsentierten aus,
**dadurch gekennzeichnet, dass** das Verfahren die folgenden Schritte aufweist:
- der Präsentationsserver erwirbt (103), abhängig von der Adresse des Endgeräts (201), von einem Identifikationsserver (207) eine dauerhafte zivile Kennung des Benutzers genannte Kennung, wobei diese dauerhafte zivile Kennung es dem Betreiber, der das private Netz kontrolliert und die dauerhafte zivile Kennung geliefert hat, ermöglicht, den Benutzer dauerhaft und zivil zu identifizieren,
- der Präsentationsserver überträgt (104) Wasserzeicheninformationen, die mindestens die dauerhafte zivile Kennung des Benutzers und eine Kennung des vom Benutzer ausgewählten digitalen Inhalts aufweisen, an einen Wasserzeichenserver (210) zum Versehen des ausgewählten digitalen Inhalts mit einem Wasserzeichen,
- wobei die ganze oder ein Teil der dauerhaften zivilen Kennung des Benutzers eine Telefonnummer ist.

2. Verfahren nach Anspruch 1, **dadurch gekennzeichnet, dass**:
- der Wasserzeichenserver den ausgewählten digitalen Inhalt vom Inhaltsserver erwirbt (105) und einen mit Wasserzeichen versehenen digitalen Inhalt erzeugt, der die vom Präsentationsserver übertragenen Wasserzeicheninformationen und den ausgewählten und erworbenen digitalen Inhalt umfasst, wobei der mit Wasserzeichen versehene digitale Inhalt eine Datei im Format des ausgewählten und erworbenen digitalen Inhalts ist,
- der Wasserzeichenserver den mit Wasserzeichen versehenen digitalen Inhalt an den Benutzer liefert (106).

3. Verfahren nach einem der Ansprüche 1 oder 2, **dadurch gekennzeichnet, dass** die Wasserzeicheninformationen digitale Verwaltungsinformationen (506) der dem digitalen Inhalt zugeordneten Rechte aufweisen.

4. Verfahren nach einem der Ansprüche 1 bis 3, **dadurch gekennzeichnet, dass** die Wasserzeicheninformationen Informationen (506) über die Nutzungsbegrenzung des digitalen Inhalts aufweisen.

5. Verfahren nach einem der Ansprüche 1 bis 4, **dadurch gekennzeichnet, dass** das private Netz (203) ein Telefonnetz ist.

6. Verfahren nach einem der Ansprüche 1 bis 5, **dadurch gekennzeichnet, dass** der Wasserzeichenserver von dem das private Netz kontrollierenden Betreiber verwaltet wird.

7. Verfahren nach einem der Ansprüche 1 bis 6, **dadurch gekennzeichnet, dass** der Wasserzeichenserver vom Anbieter digitaler Inhalte verwaltet wird.

8. Verfahren nach einem der Ansprüche 1 bis 7, **dadurch gekennzeichnet, dass** der Präsentationsserver vom Anbieter digitaler Inhalte verwaltet wird.

9. Verfahren nach einem der Ansprüche 1 bis 8, **dadurch gekennzeichnet, dass** der Erwerb einer dauerhaften zivilen Benutzerkennung durch den Präsentationsserver einer Genehmigung durch den Identifikationsserver unterliegt, wobei diese Genehmigung abhängig von einer Kennung des Senders einer Identifikationsanforderung oder einer Authentifizierung des Senders der Anforderung erfolgt.

10. Verfahren nach einem der Ansprüche 1 bis 9, **dadurch gekennzeichnet, dass** die Austauschvorgänge zwischen den Präsentations- (206), Identifikations- (207), Wasserzeichen- (210) und Inhaltsservern (213) und die Verbindung (205) durch eine gegenseitige Authentifizierung der Parteien, durch Integritätskontrollmechanismen, durch die Vertraulichkeit der Austauschvorgänge gewährleistende Mechanismen, durch die Nichtabstreitbarkeit der Austauschvorgänge gewährleistende Mechanismen geschützt werden können, wobei diese Mechanismen kryptographische Einrichtungen und Vereinbarungen anwenden.

11. Vorrichtung zum Schutz eines von einem Inhaltsserver (213) eines Anbieters digitaler Inhalte gelieferten digitalen Inhalts, die aufweist: ein Client-Endgerät (201), das sich über mindestens ein privates Netz (203) mit einem Präsentationsserver (206) verbinden kann, wobei der Präsentationsserver (206) fähig ist, einem Benutzer eines Client-Endgeräts (201) digitale Inhalte zu präsentieren, **dadurch gekennzeichnet, dass** der Präsentationsserver außerdem fähig ist, abhängig von der Adresse des Endgeräts (201), von einem Identifikationsserver (207) eine dauerhafte zivile Benutzerkennung zu erwerben, die es dem Betreiber, der ein privates Netz kontrolliert, mit dem das Endgerät verbunden ist, und der die dauerhafte zivile Benutzerkennung geliefert hat, ermöglicht, den Benutzer zivil zu identifizieren, wobei die ganze oder ein Teil der dauerhaften zivilen Benutzerkennung eine Telefonnummer ist, wobei der Identifikationsserver fähig ist, die Lieferung der dauerhaften zivilen Kennung abhängig vom Sender der Identifikationsanforderung zu erlauben oder nicht, wobei der Präsentationsserver auch fähig ist, an einen Wasserzeichenserver (210) die dauerhafte zivile Benutzerkennung und eine Kennung eines digitalen Inhalts zu übertragen, damit der Wasserzeichenserver einen mit Wasserzeichen versehenen digitalen Inhalt erzeugt, wobei der Wasserzeichenserver fähig ist, den mit Wasserzeichen zu versehenden digitalen Inhalt bei einem Server digitaler Inhalte (213) zu erwerben, wobei der Wasserzeichenserver auch fähig ist, den mit Wasserzeichen versehenen digitalen Inhalt zu liefern.

## Claims

1. Method of protecting a digital content provided by a contents server (213) of a provider of digital contents comprising the following steps:
- a presentation server (206) accepts (101) a connection of a subscriber user to an operator controlling a private network (203) and connecting by using a client terminal (201) and via at least this private network to the said presentation server of a supplier affording access to digital contents,
- the user selects (102) a digital content from among those presented by the presentation server, **characterized in that** the method comprises the following steps:
- the presentation server obtains (103), as a function of the address of the terminal (1), from an identification server (207), an identifier called an enduring civil identifier of the user, this enduring civil identifier allowing the operator that is controlling the private network and that provided the said enduring civil identifier, to enduringly and civilly identify the user,
- the presentation server transmits (104) watermarking information comprising at least the enduring civil identifier of the user and an identifier of the digital content selected by the user to a watermarking server (210), for the watermarking of the selected digital content,
- all or part of the enduring civil identifier of the user being a telephone number.

2. Method according to Claim 1, **characterized in that**:
- the watermarking server obtains (105) the selected digital content of the contents server and produces a watermarked digital content incorporating the watermarking information transmitted by the presentation server and the digital content selected and obtained, the watermarked digital content being a file in the format of the digital content selected and obtained,
- the watermarking server issues (106) the watermarked digital content to the user.

3. Method according to one of Claims 1 and 2, **characterized in that** the watermarking information comprises information (506) regarding digital management of the rights associated with the digital content.

4. Method according to one of Claims 1 to 3, **characterized in that** the watermarking information comprises information (506) regarding limitation of use of the digital content.

5. Method according to one of Claims 1 to 4, **characterized in that** the private network (203) is a telephone network.

6. Method according to one of Claims 1 to 5, **characterized in that** the watermarking server is managed by the operator controlling the private network.

7. Method according to one of Claims 1 to 6, **characterized in that** the watermarking server is managed by the provider of digital contents.

8. Method according to one of Claims 1 to 7, **characterized in that** the presentation server is managed by the provider of digital contents.

9. Method according to one of Claims 1 to 8, **characterized in that** the obtaining of a user enduring civil identifier by the presentation server is subject to approval by the identification server, this approval being effected as a function of an identifier of the sender of an identification request or of an authentication of the sender of the request.

10. Method according to one of Claims 1 to 9, **characterized in that** the exchanges between the presentation server (206), identification server (207), watermarking server (210), contents server (213) and the connection (205) can be protected by a mutual authentication of the parties, by integrity control mechanisms, by mechanisms ensuring the confidentiality of the exchanges, by mechanisms guaranteeing the non-repudiation of the exchanges, these mechanisms implementing cryptographic means and conventions.

11. Device for protecting a digital content provided by a contents server (213) of a provider of digital contents comprising: a client terminal (201) able to connect to a presentation server (206) via at least one private network (203), the presentation server (206) being able to present digital contents to a user of a client terminal (201), **characterized in that** the presentation server is moreover able to obtain as a function of the address of the terminal (201), from an identification server (207), a user enduring civil identifier allowing the operator that is controlling a private network to which the terminal is connected and that provided the said user enduring civil identifier, to identify the user civilly, all or part of the enduring civil identifier of the user being a telephone number, the identification server being able to authorize or otherwise the issuance of the enduring civil identifier as a function of the sender of the identification request, the presentation server being also able to transmit the user enduring civil identifier and an identifier of a digital content to a watermarking server (210) so that the watermarking server produces a watermarked digital content, the watermarking server being able to obtain the digital content to be watermarked from a server (213) of digital contents, the watermarking server being also able to issue the watermarked digital content.
